# EUROPÄISCHE PATENTSCHRIFT

(11) **EP 2 739 878 B1**
(45) Veröffentlichungstag und Bekanntmachung des Hinweises auf die Patenterteilung: **22.11.2017**
(21) Anmeldenummer: 12753403.0
(22) Anmeldetag: 27.07.2012
(51) Int. Cl.: F16H 3/097

(54) **SCHALTGETRIEBE FÜR EIN KRAFTFAHRZEUG**
MANUAL GEARBOX FOR A MOTOR VEHICLE
BOÎTE DE VITESSES POUR UN VÉHICULE AUTOMOBILE

(30) Priorität: 05.08.2011 DE 102011052440
(43) Veröffentlichungstag der Anmeldung: 11.06.2014
(73) Patentinhaber: Getrag Ford Transmissions GmbH, 50735 Köln (DE)
(72) Erfinder: HEGERATH, Andreas, 50126 Bergheim (DE)
(86) Internationale Anmeldenummer: PCT/EP2012/064784
(87) Internationale Veröffentlichungsnummer: WO 2013/020836

(56) Entgegenhaltungen:
- DE-A1- 2 736 834
- DE-A1-102005 046 899
- US-A- 4 269 077
- US-A- 5 609 062

## Beschreibung

Die Erfindung betrifft ein Schaltgetriebe für ein Kraftfahrzeug, wobei das Schaltgetriebe eine Eingangswelle, eine Ausgangswelle, die koaxial zur Eingangswelle angeordnet ist, eine erste, parallel zu der Eingangswelle angeordnete Vorgelegewelle und mehrere schaltbare Gänge umfasst. Jedem Gang ist dabei ein Losrad sowie eine Gangschaltkupplung zugeordnet, durch welche das betreffende Losrad mit einer der Wellen drehfest verbunden werden kann.

Aus der DE 199 48 811 B4 ist ein derartiges Schaltgetriebe bekannt. Eines der Losräder ist dabei als Zwischenrad ausgebildet, welches auf der Eingangswelle des Schaltgetriebes sitzt und mit einem ersten Ritzel und einem zweiten Ritzel kämmt. Das erste Ritzel sitzt dabei auf der ersten Vorgelegewelle, während das zweite Ritzel auf einer zweiten Vorgelegewelle angeordnet ist. Die zweite Vorgelegewelle ist mit der Ausgangswelle drehfest verbunden, so dass ein Drehmomentpfad durch das Schaltgetriebe der DE 199 48 811 B4 gegeben ist, der von der ersten Vorgelegewelle über das erste Ritzel, das Zwischenrad, das zweite Ritzel und die zweite Vorgelegewelle zur Ausgangswelle führt. Über schaltbare Losräder, welche einem ersten Vorwärtsgang und einem zweiten Vorwärtsgang zugeordnet sind, lässt sich eine drehfeste Verbindung zwischen der Eingangswelle und der ersten Vorgelegewelle herstellen, so dass bei eingelegtem erstem Vorwärtsgang bzw. eingelegtem zweitem Vorwärtsgang und unter Ausnutzung des oben beschriebenen Drehmomentpfads eine drehfeste Verbindung zwischen Eingangswelle und Ausgangswelle hergestellt werden kann. Damit lässt im Schaltgetriebe eine vergleichsweise hohe Getriebegesamtspreizung (die Übersetzungsverhältnisse der Gänge decken einen weiten Bereich ab) erreichen, ohne dass beispielsweise der Achsabstand zwischen den Wellen besonders groß gewählt sein muss.

Der entsprechende Radsatz des Schaltgetriebes der DE 199 48 811 B4 mit Losrädern und den entsprechenden Gangschaltkupplungen erfordert jedoch einen spezifischen Aufbau, der beim Einsatz des Schaltgetriebes in einem Kraftfahrzeug zu Packaging-Problemen führen könnte.

Die US 5,609,062 offenbart ein Schaltgetriebe gemäß dem Oberbegriff von Anspruch 1. Auch bei diesem Schaltgetriebe kann es zu Packaging-Problemen kommen, wenn es in einem Kraftfahrzeug eingebaut werden soll.

Der Erfindung liegt daher die Aufgabe zugrunde, ein Schaltgetriebe mit Eingangswelle und dazu axialer Ausgangswelle bereitzustellen, das einfach aufgebaut ist, eine ausreichend große Getriebegesamtspreizung aufweist und hinsichtlich Packaging-Anforderungen vorteilhaft ist.

Die der Erfindung zugrunde liegende Aufgabe wird mit der Merkmalskombination gemäß Anspruch 1 gelöst. Bevorzugte Ausführungsbeispiele können den Unteransprüchen entnommen werden. Erfindungsgemäß umfasst das Schaltgetriebe, welches bevorzugt für Kraftfahrzeuge eingesetzt werden kann, eine Eingangswelle, eine koaxial zur Eingangswelle angeordnete Ausgangswelle sowie eine erste Vorgelegewelle, die parallel zu der Eingangswelle angeordnet ist. Das erfindungsgemäße Schaltgetriebe umfasst mehrere schaltbare Gänge, wobei jedem dieser Gänge ein Losrad sowie eine Gangschaltkupplung zugeordnet ist, durch welche das Losrad mit einer der Wellen drehfest verbunden werden kann. Eines der Losräder ist als Zwischenrad ausgebildet, welches auf einer der Wellen des Schaltgetriebes sitzt und mit einem ersten Ritzel und einem zweiten Ritzel kämmt, die auf zwei anderen Wellen des Schaltgetriebes sitzen. Bei dem erfindungsgemäßen Schaltgetriebe ist das Zwischenrad unabhängig vom Schaltzustand der einzelnen Gänge drehfest mit der Eingangswelle verbunden. Mit anderen Worten ist das Zwischenrad ständig mit der Eingangswelle drehfest verbunden. Für die drehfeste Verbindung zwischen Zwischenrad und Eingangswelle bedarf es somit nicht geschalteter Gangschaltkupplungen bzw. eingelegter Gänge. Die damit einhergehende von Gangschaltkupplungen unabhängige Ankopplung des Zwischenrads an die Eingangswelle eröffnet eine große Vielzahl von Radsätzen, mit denen hinsichtlich Packaging vorteilhafte Schaltgetriebe möglich sind.

Erfindungsgemäß ist das Zwischenrad zwischen erstem Ritzel und zweitem Ritzel geschaltet, so dass eine Reihenschaltung erstes Ritzel - Zwischenrad - zweites Ritzel gegeben ist. Das erste Ritzel und/oder das zweite Ritzel können drehfest, nicht drehfest oder schaltbar drehfest mit der jeweiligen Welle verbunden sein, auf der sie gelagert sind.

Erfindungsgemäß sitzt das zweite Ritzel auf einer zweiten, vorzugsweise ebenfalls als Vorgelegewelle ausgebildeten Welle. Somit umfasst dieses Ausführungsbeispiel vier Wellen bzw. Getriebewellen, nämlich die Eingangswelle, die Ausgangswelle, die erste Vorgelegewelle und die zweite Vorgelegewelle. Der Begriff "Ritzel," soll im Übrigen hier allgemein im Sinne von "Zahnrad" verstanden werden, so dass sich durch die Verwendung des Begriffs "Ritzel" gegenüber dem Begriff des Zahnrads keine Einschränkungen ergeben.

Das erste Ritzel, das zweite Ritzel und das Zwischenrad sind in einer Ebene angeordnet. Diese Ebene erstreckt sich senkrecht zu der Eingangswelle bzw. der zu Eingangswelle koaxialen Ausgangswelle.

Die schaltbaren Gänge können mehrere Vorwärtsgänge und wenigstens einen Rückwärtsgang umfassen, wobei das als Zwischenrad ausgebildete Losrad vorzugsweise einem der Vorwärtsgänge zugeordnet ist. Vorzugsweise ist das als Zwischenrad ausgebildete Losrad dem Vorwärtsgang zugeordnet, der im Vergleich zu den anderen Vorwärtsgängen im Schaltgetriebe das höchste oder zweithöchste Übersetzungsverhältnis aufweist.

Zur Realisierung des Rückwärtsgangs kann ein Rückwärtsgangzwischenrad eingesetzt werden, was für die erforderliche Richtungsumkehr beim Rückwärtsfahren des Kraftfahrzeugs notwendig ist.

In einem bevorzugten Ausführungsbeispiel weist das Schaltgetriebe keine weitere Eingangswelle auf. Es handelt sich somit beispielsweise nicht um ein Doppelkupplungsgetriebe, das zwei Eingangswelle aufweist. Bei dieser Ausführung würde das Schaltgetriebe nur eine einzige Eingangswelle aufweisen.

Das als Zwischenrad ausgebildete Losrad lässt sich drehfest vorzugsweise mit der Ausgangswelle so verbinden, dass eine direkte Koppelung zwischen Losrad und Ausgangswelle besteht, welche zu einem synchronen Gleichlauf von Losrad und Ausgangswelle führt. Das Losrad kann dabei auf der Ausgangswelle sitzen, wobei dann die dem Losrad zugeordnete Gangschaltkupplung für die drehfeste Verbindung zwischen Ausgangswelle und Losrad sorgt. Jedoch ist auch denkbar, dass das als Zwischenrad ausgebildete Losrad auf einer anderen Welle (beispielsweise der Eingangswelle) sitzt, wobei dann die zugeordnete Gangschaltkupplung eine drehfeste Verbindung zwischen dem auf der anderen Welle (Eingangswelle) sitzenden Losrad und der Ausgangswelle herstellt. Somit muss das Losrad nicht notwendiger Weise verdrehbar mit der das Losrad tragenden Welle verbunden sein. Entscheidend ist, ob sich das Losrad über die zugeordnete Gangschaltkupplung mit der Ausgangswelle drehfest koppeln und entkoppeln lässt.

Soweit sich das als Zwischenrad ausgebildete Losrad drehfest mit der Ausgangswelle verbinden lässt, sitzt das erste Ritzel vorzugsweise auf der ersten Vorgelegewelle. Somit lässt sich ein Drehmoment von der ersten Vorgelegewelle über das erste Ritzel, das Zwischenrad, das zweite Ritzel auf die zweite Vorgelegewelle übertragen.

Eine andere bevorzugte Ausführungsform sieht vor, dass das als Zwischenrad ausgebildete Losrad sich drehfest mit der ersten Vorgelegewelle verbinden lässt. Dabei sitzt vorzugsweise das erste Ritzel auf der Eingangswelle. Der Drehmomentfluss erfolgt dabei von der Eingangswelle auf das erste Ritzel, das Zwischenrad, das zweite Ritzel und dann auf die zweite Vorgelegewelle.

In einem nicht erfindungsgemäßen Schaltgetriebe sind das erste Ritzel und das zweite Ritzel koaxial nebeneinander angeordnet. Da das Zwischenrad mit beiden Ritzeln kämmt, muss das Zwischenrad eine Breite aufweisen, die ein gleichzeitiges Kämmen der nebeneinander angeordneten Ritzel ermöglicht. Vorzugsweise entspricht dabei eine Breite des Zwischenrads in etwa einer Gesamtbreite der beiden Ritzel. Das Zwischenrad kann dabei auch ein Paket aus zwei drehfest miteinander verbundenen Zahnrädern sein.

Beispielsweise kann beim nicht erfindungsgemäßen Zahnrad das Zwischenrad ein gestuftes Zahnrad sein, das aus einem ersten Zahnrad mit größerem Durchmesser und einem Zahnrad mit kleinem Durchmesser besteht. Das Zahnrad mit größerem Durchmesser kämmt dabei vorzugsweise mit dem ersten Ritzel, während das Zahnrad mit dem kleineren Durchmesser bevorzugt mit dem zweiten Ritzel in Eingriff steht. Natürlich ist auch ein gestuftes Zahnrad denkbar, bei dem die einzelnen Zahnräder mit ihren unterschiedlich großen Durchmessern vertauscht sind, so dass das Zahnrad mit dem kleineren Durchmesser mit dem ersten Ritzel in Eingriff steht. Das erste Zahnrad des gestuften Zwischenrads kann ein Zahnrad mit Außenverzahnung sein, während das zweite Zahnrad ein Zahnrad mit Innenverzahnung sein kann. Beispielsweise kann das zweite Zahnrad als Hohlrad eines Planetenradgetriebes sein. Folglich kann das erste oder zweite Ritzel auch als Planetenrad dieses Planetenradgetriebes ausgebildet sein

In einem bevorzugten Ausführungsbeispiel sind die Eingangswelle und die Ausgangswelle durch eine Gangschaltkupplung eines Direktgangs miteinander koppelbar, so dass Eingangswelle und Ausgangswelle im gekoppelten Zustand mit gleicher Drehzahl umlaufen. Der Direktgang kann dabei ein Vorwärtsgang sein, der von den Vorwärtsgängen im Schaltgetriebe das zweitkleinste oder drittkleinste Übersetzungsverhältnis aufweist. Im Falle des zweitkleinsten Übersetzungsverhältnisses kann auch von einem sogenannten "Single Overdrive" gesprochen werden. Da der Direktgang ein Übersetzungsverhältnis von 1 aufweist (ungeachtet etwaiger Übersetzungsverhältnisse nachgeschalteter Achsen etc.), und dieser Direktgang das zweitkleinste Übersetzungsverhältnis aufweisen soll, gibt es einen Vorwärtsgang, der ein kleineres Übersetzungsverhältnis gleich 1 aufweist und somit einen "Overdrive" bzw. eine Untersetzung darstellt. Weist der Direktgang das drittkleinste Übersetzungsverhältnis im Schaltgetriebe auf, so würde man sinngemäß von "Double Overdrive" sprechen, bei dem zwei Vorwärtsgänge mit entsprechender Untersetzung realisiert sind.

Vorzugsweise treibt die zweite Vorgelegewelle das Losrad zumindest eines Ganges oder die Losräder zumindest eines Vorwärtsgangs und des Rückwärtsgangs des Schaltgetriebes an. Somit kann das Schaltgetriebe in zwei Teilgetriebe unterteilt werden, nämlich in ein Teilgetriebe mit Gängen, bei denen im eingelegten Zustand das Drehmoment nicht über das Zwischenrad erfolgt, und in ein Teilgetriebe mit Gängen, bei denen im eingelegten Zustand das Drehmoment von der Eingangswelle über das erste Ritzel, das Zwischenrad und das zweite Ritzel auf die zweite Vorgelegewelle geleitet wird. Je nach Ausführung kann zwischen der Eingangswelle und dem ersten Ritzel die erste Vorgelegewelle geschaltet sein.

Anhand der in den Figuren darstellten Ausführungsbeispielen wird die Erfindung näher erläutert. Es zeigen:
- Figur 1: ein erstes Ausführungsbeispiel eines erfindungsgemäßen Schaltgetriebes;
- Figur 2: das Schaltgetriebe im Querschnitt;
- Figur 3: ein weiteres Ausführungsbeispiel des erfindungsgemäßen Schaltgetriebes;
- Figur 4: ein weiteres Ausführungsbeispiel des erfindungsgemäßen Schaltgetriebes;
- Figur 5: ein weiteres Ausführungsbeispiel des erfindungsgemäßen Schaltgetriebes;
- Figur 6: ein weiteres Ausführungsbeispiel des erfindungsgemäßen Schaltgetriebes;
- Figur 7: ein nicht-erfindungsgemäßes Schaltgetriebe.

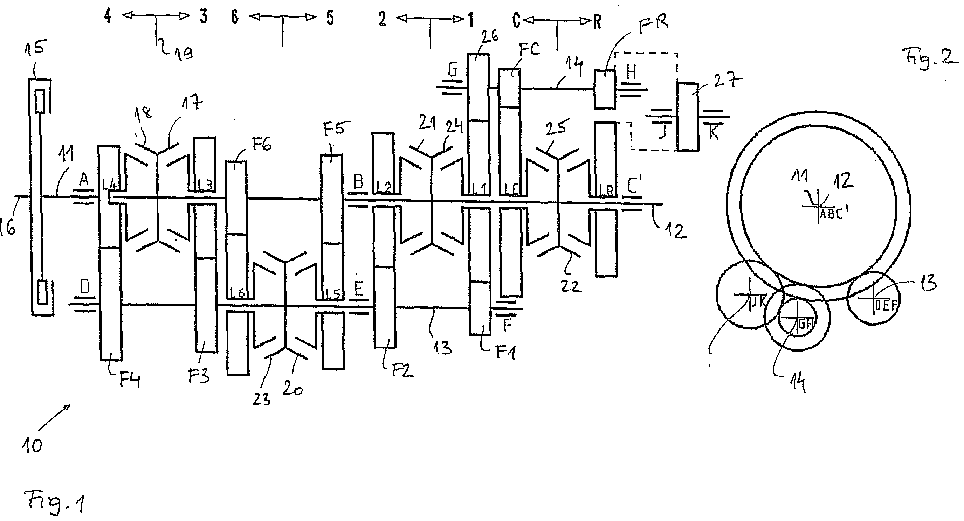

Die Figuren 1 und 2 zeigen in schematischer Weise ein erstes Ausführungsbeispiel eines Schaltgetriebes, welches in seiner Gesamtheit mit 10 bezeichnet wird. Das Schaltgetriebe 10 umfasst eine Eingangswelle 11 und eine dazu koaxial angeordnete Ausgangswelle 12. Parallel zu der Eingangswelle 11 und der Ausgangswelle 12 sind eine erste Vorgelegewelle 13 und eine zweite Vorgelegewelle 14 angeordnet. Über eine ebenfalls nur schematisch dargestellte Kupplung 15 lässt sich das Schaltgetriebe 10 bzw. die Eingangswelle 11 mit beispielsweise einer Kurbelwelle 16 eines hier nicht weiter dargestellten Verbrennungsmotors koppeln.

Das Schaltgetriebe 10 weist des Weiteren mehrere Losräder L1 bis L6, LC und LR auf, die sich mehreren Vorwärtsgängen C, 1 bis 6 und einem Rückwärtsgang R zuordnen lassen. Beispielsweise sitzt an einem der Kupplung 15 zugewandten Ende auf der Eingangswelle 11 ein Losrad L4, welches sich über eine Doppelgangschaltkupplung 17, die auf der koaxialen Ausgangswelle 12 sitzt, mit der Ausgangswelle 12 drehfest verbinden lässt. Die Doppelgangschaltkupplung 17 kann jedoch in einer anderen Schaltposition eine drehfeste Verbindung der Ausgangswelle 12 mit dem Losrad L3 herstellen. Das Losrad L4 kämmt mit einem Festrad F4, welches drehfest auf der ersten Vorgelegewelle 13 angeordnet ist. Das Losrad L3 bildet mit einem ebenfalls auf der ersten Vorgelegewelle 13 sitzenden Festrad F3 eine weitere Zahnradverbindung.

Ist der vierte Vorwärtsgang 4 eingelegt, befindet sich also eine Schiebemuffe 18 der Doppelgangschaltkupplung 17 in einer Schaltposition, in der das Losrad L4 drehfest mit der Ausgangswelle 12 verbunden ist, so wird das in der Eingangswelle 11 eingeleitete Drehmoment des nicht dargestellten Motors direkt in die Ausgangswelle 12 geleitet. Der vierte Vorwärtsgang 4 stellt somit einen Direktgang mit einem Übersetzungsverhältnis gleich 1 dar. Das Festrad F4 steht zwar mit dem Losrad L4 in Eingriff, doch wird es bei eingelegtem viertem Vorwärtsgang 4 nicht zur Drehmomentübertragung von der Eingangswelle 11 zur Ausgangswelle 12 benötigt. Ist hingegen der dritte Vorwärtsgang 3 eingelegt, wodurch eine drehfeste Verbindung zwischen Losrad L3 und Ausgangswelle 12 hergestellt ist, so wird das Drehmoment der Eingangswelle 11 über das Losrad L4 auf das Festrad F4, über die erste Vorgelegewelle 13 auf das Festrad F3 und schließlich auf das Losrad L3 und damit auf die Ausgangswelle 12 übertragen. Die oberhalb der Doppelgangschaltkupplung 17 dargestellte Pfeilanordnung 19 macht deutlich, dass in der Darstellung der Figur 1 bei einer Verschiebung der Schiebernuffe 18 nach links der vierte Vorwärtsgang 4 und bei einer Verschiebung der Schiebemuffe nach rechts der dritte Vorwärtsgang 3 eingelegt werden. Entsprechendes gilt sinngemäß für die anderen, ebenfalls mit 19 gekennzeichneten Pfeilanordnungen, dann jedoch im Zusammenhang mit anderen Gängen des Schaltgetriebes 10.

Die Losräder L6, L5, L2, L1, LC, LR lassen sich durch ebenfalls als Doppelgangschaltkupplungen ausgebildete Gangschaltkupplungen 20, 21, 22 drehfest mit der ersten Vorgelegewelle 13 bzw. mit der Ausgangswelle 12 drehfest verbinden. Beispielsweise ist der sechste Vorwärtsgang 6 eingelegt, wenn eine Schiebemuffe 23 der Doppelgangschaltkupplung 20 in der Darstellung der Figur 1 nach links verschoben ist und sich in der dortigen Schaltposition befindet. In diesem Fall sind erste Vorgelegewelle 13 und Losrad L6 drehfest miteinander verbunden. Ähnlich wie beim dritten Vorwärtsgang 3 erfolgt die Drehmomentübertragung zwischen Eingangswelle 11 und Ausganswelle 12 über das Zahnradpaar L4, F4, die Vorgelegewelle 13 und ein Zahnradpaar, welches aus dem Losrad L6 und einem Festrad F6 besteht. Daraus wird deutlich, dass das Übersetzungsverhältnis des dritten Vorwärtsgangs 3 und des sechsten Vorwärtsgangs 6 nicht nur von den Durchmessern der entsprechenden Zahnräder F3, L3 bzw. F6, L6 abhängen, sondern auch von dem Zahnradpaar F4, L4. Das Verhältnis der Durchmesser von Losrad L4 und Festrad F4 bildet somit eine Konstante, die Einfluss auf das Übersetzungsverhältnis der Gänge des Schaltgetriebes 10 hat. Ausgenommen davon ist jedoch der vierte Vorwärtsgang 4 mit seinem Übersetzungsverhältnis gleich 1.

Des Weiteren umfasst das Schaltgetriebe 10 Festräder F2, F1, FC und FR. Die Losräder L2, L1 lassen sich über die Doppelgangschaltkupplung 21 jeweils drehfest mit der Ausgangswelle 12 verbinden. Bei eingelegtem zweiten Vorwärtsgang 2 erfolgt der Drehmomentfluss von der Eingangswelle 11 wieder über das Zahnradpaar L4, F4 auf die erste Vorgelegewelle 13. Die erste Vorgelegewelle 13 treibt das Festrad F2 an, welches mit dem Losrad L2 kämmt. Aufgrund der drehfesten Verbindung zwischen Losrad L2 und der Ausgangswelle 12 bei eingelegtem zweiten Gang 2 ist somit eine Drehmomentübertragung zwischen Eingangswelle 11 und Ausgangswelle 12 hergestellt.

Bei eingelegtem erstem Vorwärtsgang 1 (Schiebemuffe 24 der Doppelgangschaltkupplung 21 ist in der Darstellung der Figur 1 nach rechts gerückt) erfolgt, in Analogie zum zweiten Vorwärtsgang 2, die Drehmomentübertragung von der ersten Eingangswelle über die erste Vorgelegewelle 13 auf die Ausgangswelle 12, jedoch nun über die Zahnräder F1, L1.

Das Losrad L1 weist jedoch auch die Funktion eines Zwischenrads auf. Es verbindet das Festrad F1 mit einem Zahnrad 26, welches drehfest mit der zweiten Vorgelegewelle 14 verbunden ist. Durch das Zusammenwirken der Zahnräder F1, L1 und 26 ist somit eine Drehmomentübertragung von der ersten Vorgelegewelle 13 auf die zweite Vorgelegewelle 14 möglich. Somit ist die Funktion des Losrads L1 nicht nur beschränkt auf die Realisierung des ersten Gangs 1. Das Zahnrad F1 kann dabei auch, wie in Anspruch 1 davon Gebrauch gemacht wird, als ein erstes Ritzel und das Zahnrad 26 kann als ein zweites Ritzel bezeichnet werden.

Ist beispielsweise der Rückwärtsgang R eingelegt, so fungiert das Losrad L1 als Zwischenrad zwischen den Ritzeln F1, 26. Das somit auf die zweite Vorgelegewelle 14 geleitete Drehmoment wird auf das Festrad FR über Zwischenschaltung eines Rückwärtsgangzwischenrades 27 auf das Losrad LR übertragen. Eine Schiebemuffe 25 der Doppelgangschaltkupplung 22 befindet sich dann in einer in der Darstellung der Figur 1 rechten Schaltposition.

Befindet sich hingegen die Schiebemuffe 25 in einer linken Schaltposition, so ist ein mit C gekennzeichneter Kriechgang eingelegt. Dieser Kriechgang weist gegenüber dem ersten Vorwärtsgang ein höheres Übersetzungsverhältnis auf. Somit kann das vorliegende Schaltgetriebe 10 sowohl als Siebengangschaltgetriebe als auch als Sechsganggetriebe bezeichnet werden, das mit einem zusätzlichen Kriechgang ausgestattet ist.

Die Übertragung des Drehmoments von der Kurbelwelle 16 auf das Zahnrad 26 erfolgt ausschließlich über das Losrad L1. Dies bedeutet, dass - abgesehen von dem Drehmomentpfad über das Losrad L1 - keine weitere Drehmoment führende Verbindung zwischen Kurbelwelle 16 (oder Eingangswelle 11) und dem Zahnrad 26 vorgesehen ist. Bei Drehmomentabgabe von der Kurbelwelle 16 auf die Eingangswelle 11 stellen somit, in Bezug auf die Reihenschaltung erstes Ritzel F1 - Zwischenrad L1 - zweites Ritzel 26, das erste Ritzel F1 ein Drehmoment abgebendes Zahnrad und das zweite Ritzel 26 ein Drehmoment aufnehmendes Zahnrad dar. Eine Drehmomentübertragung von Zahnrad 26 auf das Losrad L1 im Zugbetrieb des Verbrennungsmotors ist somit ausgeschlossen.

Das Übersetzungsverhältnis des Kriechgangs C hängt von den Durchmessern der Zahnräder L4, F4, F1, 26 sowie FC und LC ab. Dadurch lässt sich ein besonders großes Übersetzungsverhältnis realisieren, ohne dass übermäßig große Achsabstände im Schaltgetriebe 10 vorgesehen sein müssen.

Die Wellen 11, 12, 13 und 14 des Schaltgetriebes 10 sind durch Lager gelagert, die in der Figur 1 mit A, B, C', D, E, F, G und H gekennzeichnet sind. Auch das Rückwärtsgangzwischenrad 27 erfährt eine Lagerung durch Lager K, K, wobei jedoch festzuhalten ist, dass das Rückwärtsgangzwischenrad 27 bzw. eine das Rückwärtsgangzwischenrad 27 tragende Welle keine Vorgelegewelle darstellen soll.

Wie oben ausgeführt, besteht die Funktion der ersten Vorgelegewelle 13 darin, ein Drehmoment von der Eingangswelle 11 in der Ebene des Losrads L4 aufzunehmen und es in einer anderen dazu beabstandeten Ebene an die Ausgangwelle 14 abzugeben, wobei bei den meisten Gängen zwei Zahneingriffe (Losrad L4 / Festrad F4 und beispielsweise Festrad F3 / Losrad L3) zum Tragen kommen. Darüber hinaus ist jedoch auch eine Drehmomentübergabe an die Ausgangswelle 12 über die zweite Vorgelegewelle 14 mit dann entsprechend weiteren Zahneingriffen möglich. Die erste Vorgelegewelle 13 erfüllt somit die klassiche Funktion einer Vorgelegewelle in einem sogenannten Inline-Getriebe wie das erfindungsgemäße Schaltgetriebe 10, nämlich den Drehmomentabgriff von einer Hauptachse des Schaltgetriebes 10 und die Drehmomentabgabe an diese Hauptachse, wobei diese Hauptachse durch die Drehachse der koaxialen Wellen 11, 12 definiert ist.

Figur 2 zeigt das Schaltgetriebe 10 der Figur 1 schematisch im Querschnitt. Dabei wird deutlich, dass die Figur 1 das Schaltgetriebe 10 in einer aufgeklappten Darstellung zeigt, bei der sich alle Wellen und Zahnräder in der Zeichenebene befinden. Beispielsweise liegen die Eingangswelle 11, Ausgangswelle 12 und erste Vorgelegewelle 13 in einer Ebene, die von der zweiten Vorgelegewelle 14 beabstandet ist.

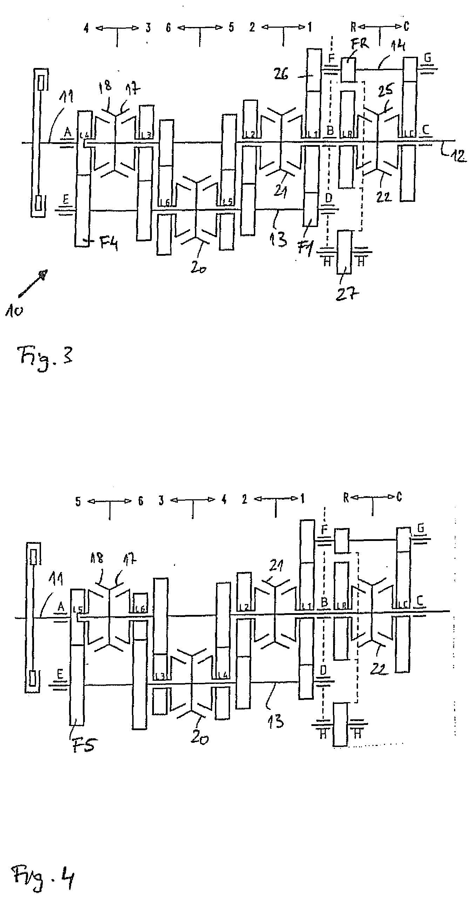

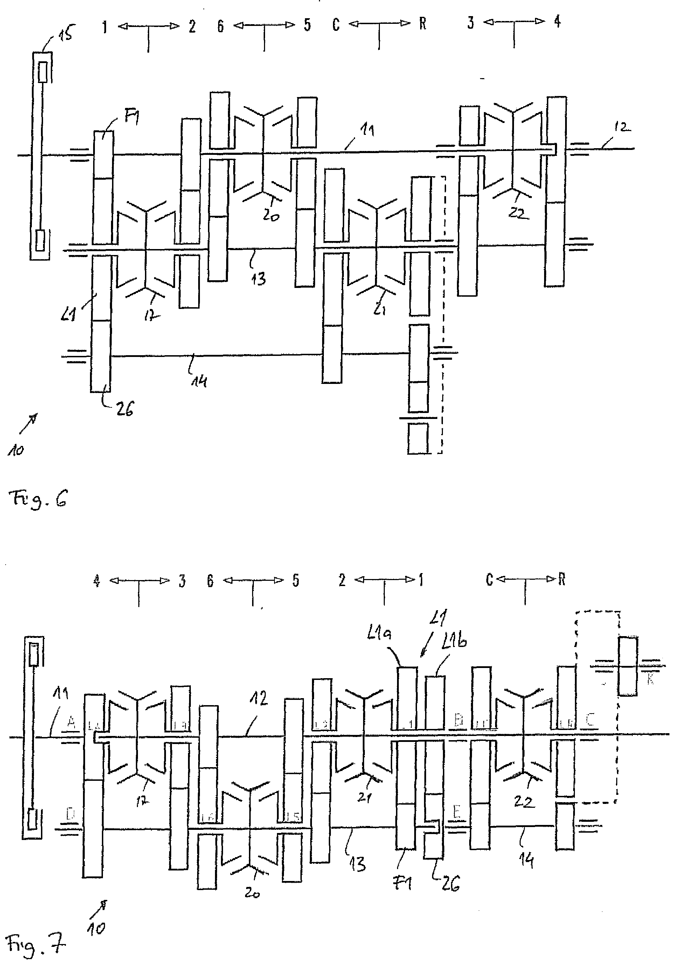

Die Figuren 3 bis 6 zeigen weitere Ausführungsbeispiele des erfindungsgemäßen Schaltgetriebes, welches durchgängig weiterhin mit 10 bezeichnet wird. Bauteile oder Merkmale, die zu Bauteilen oder Merkmalen der Figuren 1 und 2 ähnlich oder identisch sind, werden mit gleichen Bezugszeichen versehen. In der Regel wird im Folgenden nur auf die Unterschiede eingegangen, die die Ausführungsbeispiele der Figuren 3 und 6 zu dem Ausführungsbeispiel der Figur 1 bzw. zu bereits diskutierten Ausführungsbeispielen aufweisen.

Figur 3 zeigt ein Schaltgetriebe 10, bei dem im Vergleich zum Ausführungsbeispiel der Figur 1 die Lage von Kriechgang C und Rückwärtsgang R vertauscht sind. Ist die Schaltmuffe 25 in der Darstellung der Figur 3 nach links verschoben, befindet sich also in Schaltposition, so ist das Losrad LR des Rückwärtsgang R drehfest mit der Ausgangswelle 12 verbunden. Das in das Schaltgetriebe 10 eingeleitete Drehmoment an der Eingangswelle 11 wird über die Zahnräder L4, F4 auf die Vorgelegewelle 13 übertragen. Das drehfest mit der ersten Vorgelegewelle 13 verbundene Zahnrad oder Ritzel F1 überträgt das Drehmoment auf das Zwischenrad L1 und das zweite Ritzel 26, welches drehfest mit der zweiten Vorgelegewelle 14 verbunden ist. Über das Rückwärtsgangzwischenrad 27, welches zwischen Festrad FR und Losrad LR geschaltet ist, wird die Ausgangswelle 12 angetrieben. Bedingt durch die andere Lage des Rückwärtsgangs R kommt es im Vergleich zum Ausführungsbeispiel der Figur 1 auch zu einer anderen Position des Rückwärtsgangzwischenrads 27, wobei in Figur 3 die Lager des Rückwärtsgangzwischenrads 27 mit H bezeichnet werden. Die zweite Vorgelegewelle 14 weist hingegen die Lager F, G auf.

Das Ausführungsbeispiel der Figur 4 unterscheidet sich vom Ausführungsbeispiel der Figur 3 dadurch, dass die drehfeste Verbindung zwischen Eingangswelle 11 und erster Vorgelegewelle 13 über Losrad L5 und Festrad F5 erfolgt, also über die Zahnradpaarung, die dem fünften Vorwärtsgang 5 zugeordnet ist. Befindet sich die Schaltmuffe 18 der Doppelgangschaltkupplung 17 in der linken Schaltposition, so ist nicht der vierte Vorwärtsgang 4, sondern nun der fünfte Vorwärtsgang 5 eingelegt. Zwar weist der fünfte Vorwärtsgang 5 im Ausführungsbeispiel der Figur 4 das gleiche Übersetzungsverhältnis wie der vierte Vorwärtsgang 4 im Ausführungsbeispiel der Figur 3 auf (nämlich Übersetzungsverhältnis gleich 1), doch gibt es nun im Ausführungsbeispiel der Figur 4 nur einen Vorwärtsgang, der ein Übersetzungsverhältnis kleiner 1 aufweist. Es handelt sich dabei um den sechsten Vorwärtsgang 6, der auch als "Overdrive" bezeichnet werden kann. Beim Schaltgetriebe 10 der Figur 3 hingegen gibt es zwei Vorwärtsgänge 5, 6, die ein Übersetzungsverhältnis kleiner 1 aufweisen. Somit kann das Schaltgetriebe der Figur 3 auch als "Double Overdrive" bezeichnet werden.

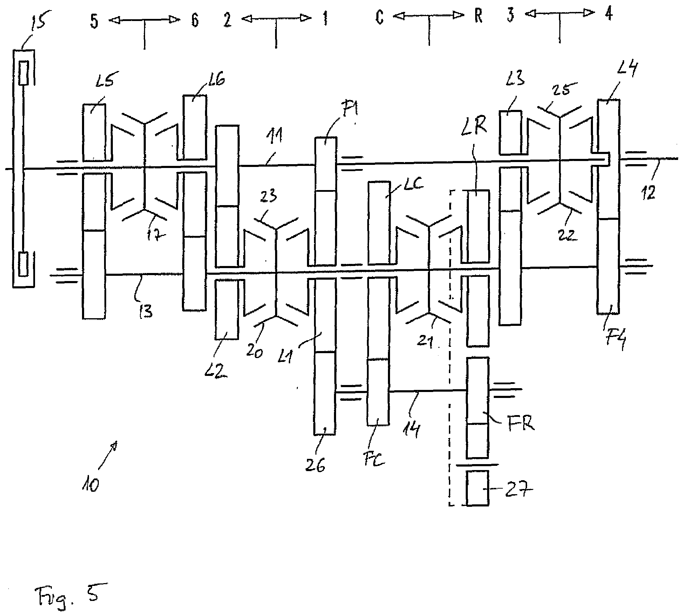

Das erfindungsgemäße Ausführungsbeispiel der Figur 5 weist gegenüber den oben beschriebenen Ausführungsbeispielen einen deutlich unterschiedlichen Aufbau auf. Dieser unterschiedliche Aufbau ist in erster Linie bedingt durch das Losrad bzw. Zwischenrad L1, das hier koaxial zur ersten Vorgelegewelle 13 angeordnet ist. Das Zwischenrad L1 steht im Eingriff mit dem ersten Ritzel F1 und dem zweiten Ritzel 26, wobei das erste Ritzel F1 nun drehfest mit der Eingangswelle 11 verbunden ist. Bei eingelegtem ersten Gang 1, wenn also die Schiebemuffe 23 der Gangschaltkupplung 20 in der Darstellung der Figur 5 nach rechts verschoben ist und sich in ihrer Schaltposition befindet, wird Drehmoment von der Kupplung 15 über die Eingangswelle 11 und dem darauf drehfest sitzenden Ritzel F1 auf das Zwischenrad L1 und somit auf das zweite Ritzel 26 übertragen. Das damit an der zweiten Vorgelegewelle 14 anliegende Drehmoment kann nun, soweit sich die Schiebemuffe 25 in entsprechender Schaltposition befindet, über die Zahnradpaarung FC, LC oder über die Zahnradverbindung FR, LR, unter Zwischenschaltung des Rückwärtsgangzwischenrads 27 auf die erste Vorgelegewelle 13 übertragen werden. Über das Zahnradpaar F4, L4 gelangt das Drehmoment letztlich auf die Ausgangswelle 12. Das Schaltgetriebe 10 der Figur 5 weist im Gegensatz zu den obigen Ausführungsbeispielen eine Eingangswelle 11 auf, die sich nahezu vollständig über die gesamte axiale Länge des Schaltgetriebes 10 erstreckt. Die Ausgangswelle 12 hingegen trägt lediglich das Losrad L4. Das Losrad L4 ist zwar fest mit der Ausgangswelle 12 verbunden, doch lässt sich durch die dem vierten Gang zugeordnete Gangschaltkupplung 22 eine drehfeste Verbindung zur Eingangswelle 11 herstellen. Somit ist die Bezeichnung Losrad für das Zahnrad L4 im Hinblick auf die Eingangswelle 11 gerechtfertigt, gleichwohl das Zahnrad L4 fest auf der Ausgangswelle 12 sitzt.

Beim Ausführungsbeispiel der Figur 5 greift die zweite Vorgelegewelle 14 Drehmoment von der ersten Vorgelegewelle 13 ab und gibt es an diese auch wieder ab. Insofern besteht ein Unterschied zu der ersten Vorgelegewelle 12, durch die Drehmomentabgriff und Drehmomentabgabe bezogen auf die Wellen (Eingangswelle 11 und Ausgangswelle 12) realisiert wird, die sich um die Hauptachse des Schaltgetriebes 10 drehen.

In Figur 5 ist das Konstantzahnradpaar L4, F4, deren Durchmesser das Übersetzungsverhältnis aller Gänge des Schaltgetriebes 10 (außer des vierten Vorwärtsgangs 4) beeinflusst, an einem der Kupplung 15 abgewandten Ende des Schaltgetriebes 10 angeordnet. Zudem zeigt das Ausführungsbeispiel der Figur 5, dass die Losräder LC, LR, die den Gängen C, R zugeordnet sind, bei denen der Drehmomentfluss durch das Schaltgetriebe 10 über das Zwischenrad L1 und die beiden Ritzel F1, 26 erfolgt, nicht notwendigerweise an einem axialen Ende des Schaltgetriebes 10 angeordnet sein müssen. So liegen die Losräder L3, L4 der Vorwärtsgänge 3, 4 in der Darstellung der Figur 5 auf der rechten Seite der Losräder LC, LR, während die Losräder L5, L6, L2 und L1 der übrigen Gänge auf der linken Seite der Losräder LC, LR liegen.

Wie auch im Ausführungsbeispiel der Figur 5 sitzt beim Ausführungsbeispiel der Figur 6 das als Zwischenrad ausgebildete Losrad L1 auf der Vorgelegewelle 13. Jedoch befindet sich das Zwischenrad L1 mit seinen Ritzeln F1, 26 in einer axialen Randlage, direkt benachbart zur Kupplung 15. Da wie auch in den übrigen Ausführungsbeispielen, was jedoch nicht notwendiger Weise der Fall sein muss, das als Zwischenrad ausgebildete Losrad L1 dem ersten Vorwärtsgang 1 zugeordnet ist, unterscheidet sich nun die axiale Lage der einzelnen Gänge 1 bis 6, C, R von der axialen Reihenfolge der Figur 5. Bedingt durch die axiale Randlage der Zahnräder F1, L1 und 26 ist die zweite Vorgelegewelle 14 gegenüber der entsprechenden Vorgelegewelle im Ausführungsbeispiel der Figur 5 deutlich länger ausgebildet.

Das nicht-erfindungsgemäße Schaltgetriebe 10 der Figur 7 weist die Besonderheit auf, dass die erste Vorgelegewelle 13 und die zweite Vorgelegewelle 14 koaxial angeordnet sind. Somit weist das Schaltgetriebe 10 je zwei koaxiale Wellen auf (Eingangswelle 11 und Ausgangswelle 12 einerseits und die beiden Vorgelegewellen 13, 14 andererseits). Das als Zwischenrad ausgebildete Losrad L1 ist als gestuftes Zahnrad ausgebildet, das ein erstes Zahnrad L1a und ein zweites Zahnrad L1b aufweist. Während das im Durchmesser etwas größere erste Zahnrad L1a mit dem ersten Ritzel F1 kämmt, kämmt das im Durchmesser etwas kleinere zweite Zahnrad L1b mit dem zweiten Ritzel 26. Die Ritzel F1, 26 sind axial nebeneinander angeordnet. Das zweite Ritzel 26 ist dabei drehfest mit der zweiten Vorgelegewelle 14 verbunden, während das erste Ritzel F1 drehfest mit der ersten Vorgelegewelle 13 verbunden ist. Im Gegensatz zu den Ausführungsbeispielen der Figuren 1 bis 6 befinden sich somit die Ritzel F1, 26 nicht in einer gemeinsamen Ebene.

### Bezugszeichenliste

- 1: Erster Vorwärtsgang
- 2: Zweiter Vorwärtsgang
- 3: Dritter Vorwärtsgang
- 4: Vierter Vorwärtsgang
- 5: Fünfter Vorwärtsgang
- 6: sechster Vorwärtsgang
- 10: Schaltgetriebe
- 11: Eingangswelle
- 12: Ausgangswelle
- 13: erste Vorgelegewelle
- 14: zweite Vorgelegewelle
- 15: Kupplung
- 16: Kurbelwelle
- 17: Doppelschaltgangkupplung
- 18: Schiebemuffe
- 19: Feilanordnung
- 20: Doppelgangschaltkupplung
- 21: Doppelgangschaltkupplung
- 22: Doppelgangschaltkupplung
- 23: Schiebemuffe
- 24: Schiebemuffe
- 25: Schiebemuffe
- 26: zweites Ritzel
- 27: Rückwärtsgangzwischenrad
- C: Kriechgang
- R: Rückwärtsgang
- A: Lager
- B: Lager
- C': Lager
- D: Lager
- E: Lager
- F: Lager
- G: Lager
- H: Lager
- J: Lager
- K: Lager
- L1: Losrad
- L2: Losrad
- L3: Losrad
- L4: Losrad
- L5: Losrad
- L6: Losrad
- LC: Losrad
- LR: Losrad
- F1: Festrad, erstes Ritzel
- F2: Festrad
- F3: Festrad
- F4: Festrad
- F5: Festrad
- F6: Festrad
- FC: Festrad
- FR: Festrad

## Patentansprüche

1. Schaltgetriebe (10) für ein Kraftfahrzeug, umfassend
- eine Eingangswelle (11),
- eine Ausgangswelle (12), die koaxial zur Eingangswelle (11) angeordnet ist,
- eine erste Vorgelegewelle (13), die parallel zu der Eingangswelle (11) angeordnet ist,
- und mehrere schaltbare Gänge (1 bis 6, L, R), wobei jedem dieser Gänge ein Losrad sowie eine Gangschaltkupplung zugeordnet ist, durch welche das Losrad mit einer der Wellen drehfest verbindbar ist,
wobei eines der Losräder als Zwischenrad (L1) ausgebildet ist, welches auf einer der Wellen des Schaltgetriebes sitzt und mit einem ersten Ritzel (F1) und einem zweiten Ritzel (26) kämmt, die auf zwei anderen Wellen des Schaltgetriebes sitzen, wobei das Zwischenrad (L1) zwischen erstem Ritzel (F1) und zweitem Ritzel (26) geschaltet ist, so dass eine Reihenschaltung erstes Ritzel-Zwischenrad-zweites Ritzel gegeben ist, wobei im Zugbetrieb in Bezug auf die genannte Reihenschaltung das erste Ritzel (F1) ein Drehmoment abgebendes Zahnrad und das zweite Ritzel (26) ein Drehmoment aufnehmendes Zahnrad darstellen und somit eine Drehmomentübertragung vom zweiten Ritzel (26) auf das Zwischenrad (L1) im Zugbetrieb ausgeschlossen ist, wobei das Zwischenrad (L1) unabhängig vom Schaltzustand der einzelnen Gänge drehfest mit der Eingangswelle (11) verbunden ist, und wobei eine zweite als Vorgelegewelle (14) ausgebildete Welle vorgesehen ist, auf der das zweite Ritzel (26) sitzt, **dadurch gekennzeichnet, dass** das erste Ritzel (F1), das zweite Ritzel (26) und das Zwischenrad (L1) in einer Ebene angeordnet sind.

2. Schaltgetriebe (10) nach Anspruch 1, **dadurch gekennzeichnet, dass** die schaltbaren Gänge mehrere Vorwärtsgänge (1 bis 6, L) und wenigstens einen Rückwärtsgang (R) umfassen, wobei das als Zwischenrad ausgebildete Losrad (L1) einem der Vorwärtsgänge zugeordnet ist

3. Schaltgetriebe (10) nach einem der Ansprüche 1 bis 2, **dadurch gekennzeichnet, dass** das als Zwischenrad ausgebildete Losrad (L1) sich mit der Ausgangswelle (12) derart verbinden lässt, dass Losrad (L1) und Ausgangswelle (12) drehfest mit einer gleichen Drehzahl umlaufen.

4. Schaltgetriebe (10) nach Anspruch 3, **dadurch gekennzeichnet, dass** das erste Ritzel (F1) auf der ersten Vorgelegewelle (13) sitzt.

5. Schaltgetriebe (10) nach Anspruch 1, **dadurch gekennzeichnet, dass** das als Zwischenrad ausgebildete Losrad (L1) sich drehfest mit der ersten Vorgelegewelle (13) verbinden lässt.

6. Schaltgetriebe (10) nach Anspruch 5, **dadurch gekennzeichnet, dass** das erste Ritzel (F1) auf der Eingangswelle (11) sitzt.

7. Schaltgetriebe (10) nach einem der Ansprüche 1 bis 6, **dadurch gekennzeichnet, dass** die Eingangswelle (11) und die Ausgangswelle (12) durch eine Gangschaltkupplung (18, 22) eines Direktgangs (4, 5) miteinander koppelbar sind, so dass sie im gekoppelten Zustand mit gleicher Drehzahl umlaufen.

8. Schaltgetriebe (10) nach Anspruch 7, **dadurch gekennzeichnet, dass** der Direktgang ein Vorwärtsgang (4, 5) ist, der von den Vorwärtsgängen im Schaltgetriebe das zweitkleinste oder drittkleinste Übersetzungsverhältnis aufweist.

9. Schaltgetriebe (10) nach einem der Ansprüche 1 bis 8, **dadurch gekennzeichnet, dass** das zweite Ritzel (26) die zweite als Vorgelegewelle ausgebildete Welle (14) antreibt, die das Losrad zumindest eines Ganges (C) oder die Losräder zumindest eines Vorwärtsgangs (C) und des Rückwärtsgangs (R) antreibt.

## Claims

1. Manual gearbox (10) for a motor vehicle, comprising
- an input shaft (11),
- an output shaft (12) which is arranged coaxially with respect to the input shaft (11),
- a first countershaft (13) which is arranged parallel to the input shaft (11),
- and multiple shiftable gears (1 to 6, L, R), wherein each of said gears is assigned an idler wheel and a gearshift clutch by means of which the idler wheel can be connected rotationally conjointly to one of the shafts,
wherein one of the idler wheels is formed as an intermediate wheel (L1) which is seated on one of the shafts of the manual gearbox and which meshes with a first pinion (F1) and with a second pinion (26) which are seated on two other shafts of the manual gearbox, wherein the intermediate wheel (L1) is connected between the first pinion (F1) and the second pinion (26) such that a series connection of first pinion-intermediate wheel-second pinion is realized, wherein, during traction operation, with regard to said series connection, the first pinion (F1) constitutes a torque-outputting toothed wheel and the second pinion (26) constitutes a torque-receiving toothed wheel, and thus a transmission of torque from the second pinion (26) to the intermediate wheel (L1) during traction operation is ruled out, wherein the intermediate wheel (L1) is connected rotationally conjointly to the input shaft (11) regardless of the shift state of the individual gears, and wherein a second shaft is provided which is formed as a countershaft (14) and on which the second pinion (26) is seated, **characterized in that** the first pinion (F1), the second pinion (26) and the intermediate wheel (L1) are arranged in a plane.

2. Manual gearbox (10) according to Claim 1, **characterized in that** the shiftable gears comprise multiple forward gears (1 to 6, L) and at least one reverse gear (R), wherein the idler wheel (L1) formed as intermediate wheel is assigned to one of the forward gears.

3. Manual gearbox (10) according to either of Claims 1 and 2, **characterized in that** the idler wheel (L1) formed as intermediate wheel can be connected to the output shaft (12) such that idler wheel (L1) and output shaft (12) rotate rotationally conjointly with the same rotational speed.

4. Manual gearbox (10) according to Claim 3, **characterized in that** the first pinion (F1) is seated on the first countershaft (13).

5. Manual gearbox (10) according to Claim 1, **characterized in that** the idler wheel (L1) formed as intermediate wheel can be connected rotationally conjointly to the first countershaft (13).

6. Manual gearbox (10) according to Claim 5, **characterized in that** the first pinion (F1) is seated on the input shaft (11).

7. Manual gearbox (10) according to one of Claims 1 to 6, **characterized in that** the input shaft (11) and the output shaft (12) can be coupled to one another by means of a gearshift clutch (18, 22) of a direct gear (4, 5), such that said input shaft and output shaft, in the coupled state, rotate at the same rotational speed.

8. Manual gearbox (10) according to Claim 7, **characterized in that** the direct gear is a forward gear (4, 5) which has the second lowest or third lowest transmission ratio out of the forward gears in the manual gearbox.

9. Manual gearbox (10) according to one of Claims 1 to 8, **characterized in that** the second pinion (26) drives the second shaft (14) which is formed as a countershaft and which drives the idler wheel of at least one gear (C) or the idler wheels of at least one forward gear (C) and of the reverse gear (R).

## Revendications

1. Boîte de vitesses (10) pour un véhicule automobile, comprenant :
- un arbre d'entrée (11),
- un arbre de sortie (12) qui est disposé coaxialement par rapport à l'arbre d'entrée (11),
- un premier arbre secondaire (13) qui est disposé parallèlement à l'arbre d'entrée (11),
- et plusieurs rapports commutables (1 à 6, L, R), une roue libre ainsi qu'un embrayage de changement de rapport étant associés à chacun de ces rapports, la roue libre pouvant être connectée de manière solidaire en rotation à l'un des arbres par le biais dudit embrayage de changement de rapports,
l'une des roues libres étant réalisée en tant que roue intermédiaire (L1) qui repose sur l'un des arbres de la boîte de vitesses et s'engrène avec un premier pignon (F1) et un deuxième pignon (26) qui reposent sur deux autres arbres de la boîte de vitesses, la roue intermédiaire (L1) étant commutée entre le premier pignon (F1) et le deuxième pignon (26) de telle sorte qu'un montage en série premier pignon-roue intermédiaire-deuxième pignon soit réalisé, en mode de traction par rapport audit montage en série, le premier pignon (F1) formant une roue dentée fournissant un couple et le deuxième pignon (26) formant une roue dentée recevant un couple et ainsi un transfert de couple du deuxième pignon (26) à la roue intermédiaire (L1) en mode de traction étant exclus, la roue intermédiaire (L1) étant connectée de manière solidaire en rotation à l'arbre d'entrée (11) indépendamment de l'état de commutation des rapports individuels et un deuxième arbre réalisé en tant qu'arbre intermédiaire (14) étant prévu, sur lequel repose le deuxième pignon (26), **caractérisée en ce que** le premier pignon (F1), le deuxième pignon (26) et la roue intermédiaire (L1) sont disposés dans un plan.

2. Boîte de vitesses (10) selon la revendication 1, **caractérisée en ce que** les rapports commutables comprennent plusieurs rapports de marche avant (1 à 6, L) et au moins un rapport de marche arrière (R), la roue libre (L1) réalisée en tant que roue intermédiaire étant associée à l'un des rapports de marche avant.

3. Boîte de vitesses (10) selon l'une quelconque des revendications 1 à 2, **caractérisée en ce que** la roue libre (L1) réalisée en tant que roue intermédiaire peut être connectée à l'arbre de sortie (12) de telle sorte que la roue libre (L1) et l'arbre de sortie (12) tournent de manière solidaire en rotation avec une même vitesse de rotation.

4. Boîte de vitesses (10) selon la revendication 3, **caractérisée en ce que** le premier pignon (F1) repose sur le premier arbre intermédiaire (13).

5. Boîte de vitesses (10) selon la revendication 1, **caractérisée en ce que** la roue libre (L1) réalisée en tant que roue intermédiaire peut être connectée de manière solidaire en rotation au premier arbre intermédiaire (13).

6. Boîte de vitesses (10) selon la revendication 5, **caractérisée en ce que** le premier pignon (F1) repose sur l'arbre d'entrée (11).

7. Boîte de vitesses (10) selon l'une quelconque des revendications 1 à 6, **caractérisée en ce que** l'arbre d'entrée (11) et l'arbre de sortie (12) peuvent être accouplés l'un à l'autre par le biais d'un embrayage à changement de vitesses (18, 22) d'un rapport direct (4, 5), de telle sorte que dans l'état accouplé, ils tournent à la même vitesse de rotation.

8. Boîte de vitesses (10) selon la revendication 7, **caractérisée en ce que** le rapport direct est un rapport de marche avant (4, 5) qui, parmi les rapports de marche avant dans la boîte de vitesses, présente le deuxième ou le troisième plus petit rapport de transmission.

9. Boîte de vitesses (10) selon l'une quelconque des revendications 1 à 8, **caractérisée en ce que** le deuxième pignon (26) entraîne le deuxième arbre (14) réalisé en tant qu'arbre intermédiaire qui entraîne la roue libre d'au moins un rapport (C) ou les roues libres d'au moins un rapport de marche avant (C) et du rapport de marche arrière (R).
